# EUROPÄISCHE PATENTSCHRIFT

(11) **EP 0 840 850 B1**
(45) Veröffentlichungstag und Bekanntmachung des Hinweises auf die Patenterteilung: **22.12.2004**
(21) Anmeldenummer: 96923859.1
(22) Anmeldetag: 18.07.1996
(51) Int. Cl.: F03G 3/00, F03G 7/10

(54) **VORRICHTUNG ZUR NUTZUNG DER ZENTRIFUGALKRAFT FÜR DIE ENERGIEUMWANDLUNG**
DEVICE FOR USING CENTRIFUGAL FORCE FOR CONVERSION OF ENERGY
DISPOSITIF PERMETTANT D'UTILISER LA FORCE CENTRIFUGE POUR CONVERSION DE L'ENERGIE

(30) Priorität: 25.07.1995 DE 19527096; 03.04.1996 DE 19613369
(43) Veröffentlichungstag der Anmeldung: 13.05.1998
(73) Patentinhaber: MUNNECKE, Gustav-Adolf, 31073 Grünenplan (DE)
(72) Erfinder: MUNNECKE, Gustav-Adolf, 31073 Grünenplan (DE)
(74) Vertreter: Läufer, Martina, Dr.
(86) Internationale Anmeldenummer: PCT/DE1996/001300
(87) Internationale Veröffentlichungsnummer: WO 1997/005380

(56) Entgegenhaltungen:
- WO-A-90/06860
- FR-A- 2 332 438
- GB-A- 190 912 318
- US-A- 3 863 510

## Beschreibung

Die Erfindung betrifft eine Vorrichtung zur Nutzung der Zentrifugalkraft für die Energieumwandlung mittels eines Rotationsaggregates mit in radialen Führungen verschiebbaren Gewichten als Fliehkraft-Reaktionsmassen, deren Translationsbewegung unter der Wirkung der Schwerkraft ausgenutzt wird.

Es ist bekannt, die Zentrifugalkraft auszunutzen zum Fortbewegen von in ein Rotationsaggregat eingebrachten bzw. mit einem solchen verbundenen Massen, wie Körpern, Partikeln und Flüssigkeiten, z. B. in Zentrifugen zum Trennen von in einer Flüssigkeit enthaltenen Stoffen unterschiedlicher Dichte, in Flüssigkeitspumpen und Zentrifugaltrocknern zum Fortbewegen von Flüssigkeiten, in Tourenzählern für die Umdrehungszählung und in Zentrifugalreglern für die Regelung von Dampfkraftmaschinen. Bei den letzten beiden Arten von Vorrichtungen wird die von der Zentrifugalkraft bewirkte Fortbewegung von festen Massen durch geeignete Energieübertragungsmittel in Bewegungsenergie anderer Körper umgewandelt, z. B. in Bewegungsenergie für Zeiger oder Ventile.

Die Erfindung betrifft eine Vorrichtung dieser Art mit Umwandlung der Bewegungsenergie der von der Zentrifugalkraft unmittelbar beaufschlagten Massen in Energie für andere Energieverwertungs- oder -speichervorrichtungen.

Ausgehend von den Sätzen von der Drehimpuls- und Energieerhaltung (vgl. z. B. Horst Stöcker, Taschenbuch der Physik, 2. Auflage 1994, Verlag Harri Deutsch, Frankfurt am Main, Thun, Seiten 60-77) hat der Erfindung die Aufgabe zugrunde gelegen, eine kostengünstig und einfach herstellbare Energieumwandlungsvorrichtung der vorstehend genannten Art zu schaffen, welche eine umweltschonende Energieumwandlung mit großem Kosten/Nutzen-Effekt für Antriebszwecke (z. B. Fahrzeugantrieb) oder für die dezentrale Strom- oder Wärmeerzeugung ermöglicht.

Die Erfindung besteht in den Merkmalen des Anspruchs 1. Weitere Ausgestaltungen der Erfindung sind Gegenstand der Unteransprüche.

Die Erfindung ist nachstehend anhand der Zeichnungen beispielsweise erläutert. Diese zeigt in schematischer Darstellung:

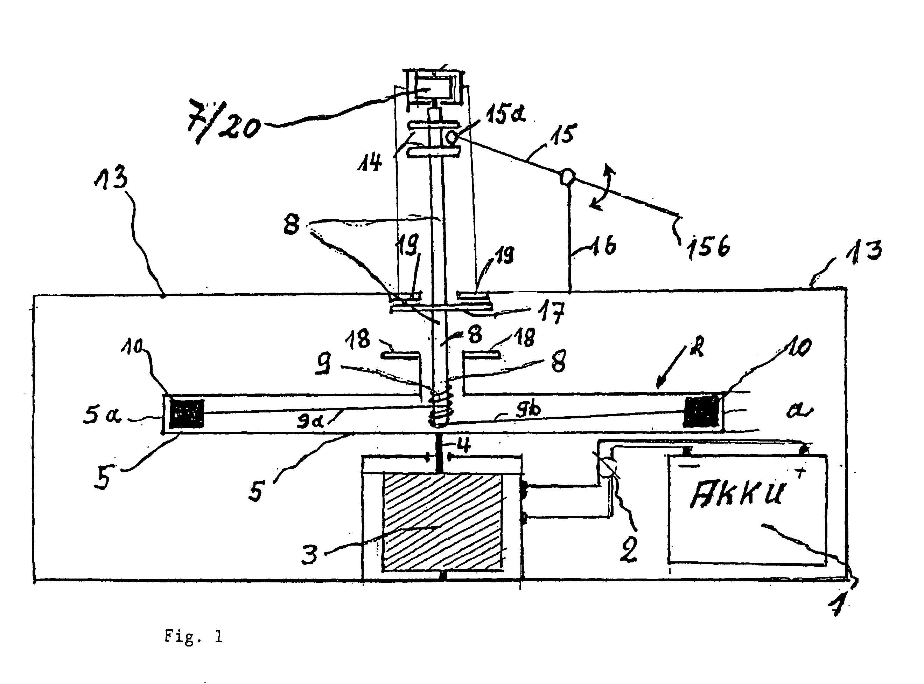

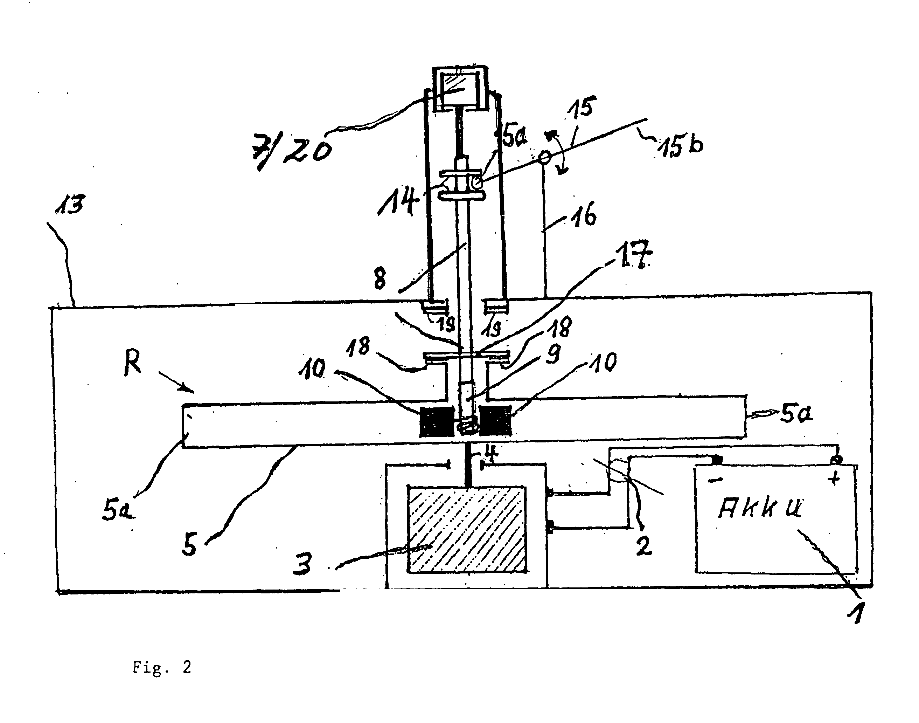

Fig. 1 und 2: eine Ausführungsform in verschiedenen Betriebsstellungen.

Bei der dargestellten Ausführung ist ein Akkumulator 1 über eine stufenlos arbeitende, elektronische Regelschaltung 2 mit einem Motor/Generator 3 verbunden, der von der Betriebsstellung "Motor" in die Betriebsstellung "GleichstromGenerator" umschaltbar ist. Die Welle 4 des Motors/Generators 3 ist antriebsmäßig mit einem Drehrahmen 5 verbunden. In diesem sind Gewichte 10 radial zum Rahmen-Rotationszentrum verschiebbar gelagert, die durch eine Halte- und Rückholvorrichtung mit dem Rahmenzentrum verbunden sind und mittels dieser in einer zentralen Ruhestellung am Rahmenzentrum gehalten werden, so lange die Rahmendrehzahl und damit die Zentrifugalkraft unterhalb eines vorgebbaren Grenzwertes liegen, und unter der Wirkung der Zentrifugalkraft in eine periphere Endstellung am Rahmenrand 5a ausfahrbar sind, aus der sie mittels der Halte- und Rückholvorrichtung in die Ruhestellung zurückholbar sind. Diese Halte- und Rückholvorrichtung wirkt mit (nicht dargestellten) Mitteln zum Arretieren der Gewichte 10 in deren Ruhestellung zusammen, die bei Erreichen der vorgegebenen Rahmendrehzahl die Gewichte 10 freigeben. Bei der dargestellten Ausführungsform besteht die Halte- und Rückholvorrichtung aus Seilzügen 9a, 9b, deren eines Ende mit je einem Gewicht 10 verbunden ist und deren anderes Ende auf einer mit dem Drehrahmen-Rotationszentrum verbundenen Seiltrommel 9 aufgewickelt bzw. aufwickelbar ist. Die Seiltrommel 9 ist am unteren Ende einer Welle 8, die mit diesem Ende durch ein zentrales Drehlager in der Drehrahmen-Oberwandung von oben in den Drehrahmen-Innenraum hineinragt, angeordnet.

Der Akkumulator 1, der Regler 2, der Motor/Generator 3, mit dem über die Welle 4 antreibbaren Drehrahmen 5, mit über die Seilzüge 9a, 9b mit der Seiltrommel 9 verbundenen Gewichten 10 bilden das Rotationsaggregat R. Dieses ist noch mit hier nicht dargestellten, weil für den Fachmann nicht erläuterungsbedürftigen Mitteln zum Umschalten des Motor/Generators 3 auszurüsten, welche bei Stillstand des Drehrahmens 5 auf Motorbetrieb schalten und auf Generatorbetrieb umschalten, sobald die Gewichte 10 in der peripheren Endstellung eintreffen.

Das Rotationsaggregat R ist in einem Gehäuse 13 angeordnet, dessen Oberwandung von der Drehrahmen-Oberseite Abstand hat und dadurch einen Zwischenraum abgrenzt, durch den sich die Welle 8 hindurcherstreckt. Diese ist in Gleit- und Drehlagen in der Oberwandung des Gehäuses 13 bzw. des Drehrahmens 5 gelagert. An ihrem über die Gehäusewandung 13 vorstehenden Ende ist die Welle 8 mit einem Drehlager 14 für ein Ende 15a eines Schwenkhebels 15 versehen, der zwecks axialer Höhenverstellung der Welle 8 an einem Aufsatz an dem Gehäuse 13 verschwenkbar gelagert ist und dessen anderes Ende 15b in Abhängigkeit von der mittels eines Drehzahlmessers gemessenen Rahmendrehzahl mittels einer Stellvorrichtung verschwenkbar ist im Sinne eines Anhebens oder Absenkens der Welle 8 in axialer Richtung zwischen zwei Endstellungen und einer dazwischenliegenden Mittelstellung.

Die Endstellungen der Welle 8 sind durch Kupplungsmittel 17, 18, 19 vorgegeben, durch welche die Welle 8 in der unteren Endstellung mit dem Drehrahmen 5 kraftschlüssig verbunden wird und in der oben Endstellung mit dem Gehäuse 13. Diese Kupplungsmittel bestehen aus einer Kupplungsscheibe 17 an der Welle 8 und kreisringförmigen Kupplungsscheiben 18 bzw. 19 entlang der Durchführungslager für die Welle 8 in der Drehrahmen- bzw. Gehäuseoberwandung. In der unteren Endstellung ist die Welle 8 synchron mit dem Drehrahmen 5 antreibbar und in der oberen Endstellung ist die Welle 8 vom Drehrahmen 5 abgekuppelt und mit dem stationären Gehäuse 13 kraftschlüssig verbunden, so dass eine Rotation der Welle 8 mit Seiltrommeln 9 gegenüber dem Gehäuse 13 unterbunden ist und der Drehrahmen 5 mit den Gewichten 10 sich bei Umdrehungen gegenüber der Seiltrommel 9 dreht, dies je nach der angeschaltenen Motordrehrichtung in einem Sinn, in dem die Seite 9a, 9b von der Seiltrommel abgespult werden oder auf die Seiltrommel 9 aufgespult werden. Die Mittelstellung ist eine Freilaufstellung, welche eine Rotation der Welle 8 sowohl gegenüber dem Drehrahmen 5 als auch gegenüber dem Gehäuse 13 gestattet.

Um der Verschiebung der Welle 8 in deren Längsrichtung Rechnung tragen zu können, ist die Seiltrommel 9 auf der Welle 8 in deren Längsrichtung verschiebbar gelagert, so dass sie beim Anheben der Welle 8 im Höhenbereich der Gewichte 10 verbleibt.

Die Vorrichtung arbeitet wie folgt:

Zunächst wird der Drehrahmen 5 bei in eingefahrener Stellung mittels der Seiltrommel 9 oder in anderer Weise arretierten Gewichten 10 in Rotation versetzt, wozu der Motor/Generator 3 auf Motorbetrieb geschaltet ist und mittels der Welle 8 den Drehrahmen 5 antreibt. Der Hebel 15 befindet sich dabei in einer Stellung, bei welcher die Kupplungsscheibe 17 mit dem Kupplungsrad 18 kraftschlüssig verbunden ist und somit die Welle 8 mit der Seiltrommel 9 synchron mit dem Drehrahmen 5 umläuft. Die Motordrehrichtung entspricht der entgegengesetzten Drehrichtung, mit welcher die Seilzüge 9a, 9b um die Seiltrommel 9 herumgewickelt sind.

Infolge der Rotation des Drehrahmens 5 wirkt eine Zentrifugalkraft auf die Gewichte 10 ein, welche bestrebt ist, diese zur Peripherie 5a des Drehrahmens 5 hinzubewegen. Nach Erreichen einer vorgebbaren bzw. vorgegebenen (Höchst-) Drehzahl (z. B. ca. 1.400 Umdrehungen je Minute) wird die Arretierung für die Gewichte 10 gelöst, z. B. mittels eines von einem Drehzahlmesser abgegebenen Signals. Bei Aufrechterhaltung der Schaltung für Motorantrieb wird die kraftschlüssige Verbindung des Drehrahmens 5 mit der Seiltrommel 9 bzw. Welle 8 bei Aufrechterhaltung der Schaltung für Motorantrieb gelöst, so dass der Motor 3 nur noch den Drehrahmen 5 antreibt und eine Relativdrehung zwischen Seiltrommel 9 und Drehrahmen 5 möglich ist. Die Zentrifugalkraft bewirkt eine Verschiebebewegung der freigegebenen Gewichte 10 radial zum Drehrahmen-Außenrand 5a hin, unter Zug an den Seilen 9a und 9b und Abwickeln derselben von der Seiltrommel 9.

Bei Erreichen der vorgegebenen Drehzahl zwecks Entkupplung der Welle 8 vom Motorantrieb wird der Hebel 15 verschwenkt im Sinne einer Anhebung der Welle 8 bis zur kraftschlüssigen Verbindung von deren Kupplungsscheibe 17 mit dem Gehäuse-Kupplungsrand 19 unter Arretierung der Welle 8. Die Seiltrommel 9 verschiebt sich dabei auf der Welle 8 nach unten und die Seile 9a, 9b werden durch die Drehung des Drehrahmens 5 gegenüber der arretierten Seiltrommel 9 von dieser abgewickelt unter Fliehen der Gewichte 10 zur Rahmenperipherie 5a.

Wenn die Gewichte 10 ihre maximal ausgefahrene Stellung am Rahmenrand 5a erreicht haben, wird durch den Anschlag der Gewichte 10 am Rahmenrand 5a oder in anderer geeigneter Weise ein Schaltvorgang ausgelöst, welcher den Motor/Generator 3 auf Generatorbetrieb umschaltet, so dass die Rotationsbewegung des Drehrahmens 5 während dessen Auslaufens bis zu seinem Stillstand ausgenutzt wird zur Energieumwandlung mittels des Generators 3.

Bei dieser Ausführung wird beim Umschalten auf Generatorbetrieb auch mittels des vom Drehzahlmesser gesteuerten Hebels 15 die Welle 8 in eine Freilaufstellung geschaltet, bei welcher die Kupplungsscheibe 17 der Welle 8 sich in einer Stellung zwischen den beiden Kupplungsrändern 18, 19 befindet.

Bei Erreichen des Stillstands des Drehrahmens 5 wird ein Schaltvorgang ausgelöst, welcher die Rückführung der Gewichte 10 in ihre eingefahrene Stellung und anschließend bei Umschalten des Motors/Generators 3 auf Motorbetrieb im Arbeitszyklus-Drehsinn bewirkt unter erneuter Einleitung der Rotationsbewegung des Drehrahmens 5 und eines neuerlichen Energieumwandlungs-Zyklus.

Die Rückführung der Gewichte 10 wird in der Weise bewirkt, dass bei Stillstand des Drehrahmens 5 zunächst die Kupplungsscheibe 17 kurz mit dem Kupplungsrand 19 des Gehäuses 13 kraftschlüssig verbunden und die Drehrichtung des auf Motorbetrieb geschalteten Motors/Generators 3 kurz verändert wird im Sinne einer Aufspulung der Seile 9a, 9b auf die Seiltrommel 9 und der Einholung der Gewichte 10 in ihre Ausgangsstellung (Fig. 2).

Die Erfindung ist nicht auf die dargestellte und beschriebene Ausführungsform beschränkt, die im Rahmen der augefügten Patentansprüche fachmännische Veränderungen erfahren kann, insbesondere hinsichtlich des Rotationsaggregates R. Dessen Drehrahmen kann die Form eines in seiner Mitte angetriebenen, langgestreckten Rahmenteiles mit Rinnenprofil haben, in dessen Rinne die Massen verschiebbar gelagert sind, oder er kann aus mehreren solcher Rahmenteile in einander mittig überschneidender Anordnung gebildet sein oder eine Kreisscheibe mit radial verlaufenden Führungsschienen oder -bahnen für die Massen sein.

Die Halte- und Rückholvorrichtung für die Massen kann auch aus einer Zahnstangenvorrichtung bestehen.

Anstelle der festen Gewichte 10 können auch flüssige Massen als auf die Zentrifugalkräfte ansprechende Mittel innerhalb eines im Drehrahmen radial angeordneten Zirkulationssystems vorgesehen sein, die durch die Fliehkraft in zirkulierende Bewegung versetzt werden, welche mittels einer in den Zirkulationsstrom eingeschalteten turbinenartigen Vorrichtung für die Energieumwandlung ausgenutzt wird.

## Patentansprüche

1. Vorrichtung zur Nutzung der Zentrifugalkraft für die Energieumwandlung, bestehend aus
- einem Rotationsaggregat (R) mit umschaltbarem Motor/Generator (3) und mit diesem antriebsmäßig verbundenem Drehrahmen (5), auf/in/an dem in radialen Führungen verschiebbare Gewichte (10) als Fliehkraft-Reaktionsmassen, die über Seilzüge (9a, 9b) mit einer im Drehzentrum angeordneten Seiltrommel (9) verbunden sind, von der die Seile (9a, 9b) sich beim Ausfahren der Gewichte (10) von einer zentralen Ruhe-Position in eine periphere Endposition (5a) abspulen, wobei die Seiltrommel (9) auf dem unteren Ende einer Welle (8) in deren Längsrichtung verschiebbar angeordnet ist, die durch ein zentrales Lager in der Drehrahmen-Oberwandung und ein dazu koaxiales Lager im Gehäuse (13) des Drehaggregates (R) hindurchgeführt ist zu einer an ihrem oberen Ende angreifenden Stellvorrichtung (15), welche die Welle (8) zwischen einer unteren Endposition, in der sie kraftschlüssig mit dem Drehrahmen (5) verbunden ist, über eine dazwischen liegende Wellen-Freitaufposition in eine obere Endposition axial verschieben kann, in der die Welle (8) kraftschlüssig mit dem Gehäuse (13) verbunden ist,
- aus Mitteln zum Umschalten des Motor/Generators (3) auf Generator-Betrieb bei Lösen einer Massen-Arretierung oder bei Eintreffen der Masse(n) in der peripheren Endposition (5a) sowie zum Schalten auf Motorbetrieb bei Drehrahmen-Stilistand sowie
- aus Mitteln zum Rückführen der Masse(n) (10) in die Ruheposition (9a, 9b, 9) bei Drehrahmen-Stillstand.

2. Vorrichtung nach Anspruch 1, **gekennzeichnet durch** eine auf der Welle (8) befestigte Kupplungsscheibe (17) zum Zusammenwirken mit Kupplungsrändern (18, 19) entlang der koaxialen Durchführungs-Lager im Drehrahmen (5) bzw. Gehäuse (13).

3. Vorrichtung nach Anspruch 1 oder 2, **dadurch gekennzeichnet, dass** die Verstellvorrichtung für die Welle (8) aus einem an einem Gehäuseaufsatz (16) verschwenkbar gelagerten Hebel (15) besteht, dessen eines Ende (15a) in einem Drehlager (14) oben an der Welle (8) gelagert ist und dessen anderes Ende (15b) in Abhängigkeit von der Drehrahmen-Drehzahl verschwenkbar ist.

4. Vorrichtung nach mindestens einem der vorhergehenden Ansprüche, **gekennzeichnet durch** einen Drehzahlmesser, dessen Ausgangssignale elektronische Schaltvorrichtungen für die drehzahlabhängigen Schaltvorgänge steuern.

5. Vorrichtung nach mindestens einem der vorhergehenden Ansprüche, **gekennzeichnet durch** eine von den Massen (Gewichten) (10) bei Erreichen von deren peripherer Endposition beaufschlagte Schaltvorrichtung zum Umschalten des Motors (3) auf Generatorbetrieb.

6. Vorrichtung nach Anspruch 5, **gekennzeichnet durch** eine Vorrichtung zum kurzzeitigen Umschalten des Motor/Generators auf Motorbetrieb mit Umkehrung der Drehrichtung zwecks Aufspulen der Seile (9a, 9b) auf die Seiltrommel (9) bei Drehrahmen-Stillstand.

7. Vorrichtung nach mindestens einem der vorhergehenden Ansprüche, **gekennzeichnet durch** einen langgestreckten Drehrahmen (5) mit rinnenförmigem Profil und Endquerwandungen an den Längsenden.

8. Vorrichtung nach Anspruch 6, **gekennzeichnet durch** eine Vorrichtung mit antreibbarer Welle (8) in Freilaufstellung **durch** einen zusätzlichen Motor (7) (20) zur Rückholung der Gewichte (10) in Ruhestellung bei Drehrahmenstillstand.

## Claims

1. A device for using centrifugal force for generating energy, consisting of
- a rotary device (R) with a reversible motor/generator (3) and a rotary frame (5) connected by a transmission system with it, on/in/at which weights (10) movable on radial guides are arranged acting as reaction masses for centrifugal force which are connected with the cable drum (9) arranged on the axis of rotation by means of cables (9a, 9b). These cables (9a, 9b) will unreel upon the extension of the weights (10) from a central rest position into a peripheral final position (5a) while the cable drum (9) is movably arranged at the bottom end of the shaft (8) in its longitudinal direction which by means of a central bearing in the upper walls of the rotary frame and a bearing coaxial to it in the housing (13) of the rotary device (R) is lead to a control mechanism (15) engaging the shaft at the upper end which is able to axially shift the shaft between a lower final position in which it is non-positively locked with the rotary frame (5) via the free wheel position of the shaft between it to an upper final position in which the shaft (8) is non-positively locked with the housing (13), of means for the switching of the motor/generator (3) to generator operation upon the release of a mass lock or upon the arrival of mass (masses) in the peripheral end position (5a) and also the switching to motor operation upon the standstill of the rotary frame and also of means for the return of mass/masses (10) into the rest position (9a, 9b, 9) upon standstill of the rotary frame.

2. Device according to claim 1, typified by a clutch disc (17) attached to the shaft (8) for the combined operation of the coupling edges (18, 19) alongside the coaxial through bearings in the rotary frame (5) or the housing (13) respectively.

3. Device according to claim 1 or 2, typified by the fact that the shifting device for the shaft (8) consists of a lever (15) which is swivel-mounted on the attachment of the housing (16) the one end (15a) of which is positioned in a pivot bearing (14) at the upper end of the shaft (8) and the other end (15b) of which can be moved/swung in dependence from the rotation speed of the rotary frame.

4. Device according to at least one of the aforementioned claims, typified by a revolution counter the output signals of which control electronic switching devices for rotation-dependent switching processes.

5. Device according to at least one of the aforementioned claims, typified by switching device for the switching of the motor (3) to the generator mode actuated by the masses (weights) (10) reaching their peripheral final positions.

6. Device according to claim 5, typified by a device for the short-term switching of the motor/generator to the motor mode with reversion of the rotation direction for the reeling-up of the cables (9a, 9b) onto the cable drum (9) upon standstill of the frame.

7. Device according to at least one of the aforementioned claims, typified by a long-stretched-out rotary frame (5) with trough-shaped profiles and transverse walls at the longitudinal ends.

8. Device according to claim 6, typified by a device with a driveable shaft (8) in free wheel position and an additional motor (17)(20) for the return of the weights (10) upon standstill of the rotary frame.

## Revendications

1. Dispositif pour utiliser la force centrifuge pour la conversion d'énergie, constitué :
- d'un ensemble de rotation (R) avec moteur/générateur commutable (3) et cadre tournant (5) en liaison d'entraînement avec le moteur/générateur, cadre sur/dans lequel des poids (10) formant masses de réaction à force centrifuge coulissent dans des guidages radiaux et sont reliés, par des câbles de traction (9a, 9b), avec un tambour d'enroulement (9) agencé au centre de rotation et d'où les câbles (9a, 9b) se dévident lorsque les poids (10) quittent une position de repos centrale pour gagner une position extrême (5a) périphérique, le tambour d'enroulement (9) étant monté sur l'extrémité inférieure d'un arbre (8) en pouvant coulisser dans la direction longitudinale de cet arbre, lequel traverse un palier central dans la paroi supérieure du cadre tournant et un palier coaxial au précédent dans le carter (13) de l'ensemble tournant (R) pour s'étendre jusqu'à un dispositif de réglage (15) venant en prise à son extrémité supérieure, le dispositif de réglage pouvant faire coulisser axialement l'arbre (8) d'une position extrême inférieure dans laquelle il est relié avec le cadre tournant (5) par serrage, en passant par une position intermédiaire de libre rotation de l'arbre, jusqu'à une position extrême supérieure dans laquelle l'arbre (8) est relié par serrage avec le carter (13),
- de moyens pour commuter le moteur/générateur (3) au fonctionnement en générateur lors de la libération d'un blocage des masses ou lors de l'arrivée de la ou des masses dans la position extrême périphérique (5a), ainsi que pour passer au fonctionnement en moteur lors de l'arrêt du cadre tournant, et
- de moyens pour ramener la ou les masses (10) dans la position de repos (9a, 9b, 9) lors de l'arrêt du cadre tournant.

2. Dispositif selon la revendication 1, **caractérisé par** un disque d'embrayage (17) fixé sur l'arbre (8) pour coopérer avec des bordures d'embrayage (18, 19) le long des paliers de traversée dans le cadre tournant (5) et respectivement le boîtier (13).

3. Dispositif selon la revendication 1 ou 2, **caractérisé en ce que** le dispositif de réglage pour l'arbre (8) est constitué d'un levier (15) monté pivotant sur une protubérance du boîtier (16), une extrémité (15a) du levier étant supportée dans un palier tournant (14) en haut sur l'arbre (8) et l'autre extrémité (15b) pouvant être basculée en fonction de la vitesse de rotation du cadre tournant.

4. Dispositif selon au moins une des revendications précédentes, **caractérisé par** un compte-tours dont les signaux de sortie pilotent des dispositifs de commutation électronique pour les processus de commutation dépendant de la vitesse de rotation.

5. Dispositif selon au moins une des revendications précédentes, **caractérisé par** un dispositif de commutation sur lequel agissent les masses (poids) (10) lorsqu'elles atteignent leur position extrême périphérique, pour commuter le moteur (3) en fonctionnement de générateur.

6. Dispositif selon la revendication 5, **caractérisé par** un dispositif pour commuter brièvement le moteur/générateur au fonctionnement en moteur avec inversion du sens de rotation en vue d'enrouler les câbles (9a, 9b) sur le tambour d'enroulement (9) lors de l'arrêt du cadre tournant.

7. Dispositif selon au moins une des revendications précédentes, **caractérisé par** un cadre tournant allongé (5) avec profil en forme de canal et parois transversales extrêmes aux extrémités longitudinales.

8. Dispositif selon la revendication 6, **caractérisé par** un dispositif à arbre (8) pouvant en position de libre rotation être entraîné par un moteur additionnel (7) (20) pour ramener les poids (10) en position de repos lorsque le cadre tournant est au repos.
